# EUROPEAN PATENT APPLICATION

(11) **EP 1 580 591 A1**
(43) Date of publication of application: **28.09.2005**
(21) Application number: 05006675.2
(22) Date of filing: 25.03.2005
(51) Int. Cl.: G02C 7/10, G02C 7/12, G02B 5/20

(54) **Polarizing optical elements enhancing color contrast and methods for their manufacture**

(30) Priority: 25.03.2004 US 556261 P
(71) Applicant: INTERCAST EUROPE S.P.A., I-43100 Parma (IT)
(72) Inventor: Iori, Giuseppe, 42100 Reggio Emilia (IT); Marusi, Graziano, 43010 Fontana-Eia (Parma) (IT); Baiocchi, Paolo, 43100 Parma (IT); Pritts, James E., Emerald Hills, CA 94062 (US)
(74) Representative: Bottero, Claudio

(57) **Abstract**

A polarized optical element comprising a polarized optical part is dyed so that the optical part exhibits a curve of spectral transmittance in a wavelength range comprised between 400 and 700 nm comprising: i) at least one relative maximum at a wavelength comprised between 400 and 510 nm, and ii) at least one relative minimum at a wavelength comprised between 510 to 625 nm, wherein the ratio between the value of the factor of spectral transmittance at said at least one relative maximum and the value of the factor of spectral transmittance at said at least one relative minimum is of at least 1.3, and wherein the ratio between the value of the factor of spectral transmittance at a wavelength of 700 nm and the value of the factor of spectral transmittance at said at least one relative minimum is of at least 3.0.

Advantageously, such a polarized optical element is both polarized to reduce glare and provides the wearer with enhanced visual acuity, especially an increased sensitivity to the red and blue colors so as to meet the color and traffic signal recognition requirements of the international standards.

## Description

### FIELD OF THE INVENTION

In a general aspect, the present invention relates to a polarized optical element for use in eye-protecting devices such as eyeglasses, masks, visors and the like.

More particularly, the invention relates to optical-quality polarized optical elements, and, in particular, to polarized lenses for use in sunglasses, which provide the wearer with enhanced color contrast perception.

The polarized optical element of the invention may be either a semi-finished product from which it is possible to obtain by forming and possibly by beveling an ocular for eye-protecting devices, such as for instance a lens of any shape for eyeglasses, or a finished product, such as for instance an ocular in the form of lenses for eyeglasses, either ophthalmic or not, protection masks or portable shields.

The invention also refers to methods for manufacturing said polarized optical element and to an eye-protecting device comprising the same.

In the following description and in the appended claims, the terms: eye-protecting device, and: ocular, are intended to indicate elements suitable respectively to protect the eyes and to allow the vision, as defined by European Standard CEN EN 165.

### BACKGROUND OF THE INVENTION

As is known, the sun gives off electromagnetic radiation consisting of oscillatory electric field and oscillatory magnetic field that are perpendicular to one another and to the direction of propagation of the radiation. The electromagnetic radiation is comprised of photons, which are quantum energy packets of electromagnetic radiation, having certain oscillation wavelengths inversely related to their energy. Therefore, a photon oscillating at a high wavelength will have a low energy and a photon oscillating at a low wavelength will have a high energy.

Human eyes respond to the difference in wavelength, which they convert into electrical signals that the brain elaborates to give the various sensations of color. The range of wavelengths that the human eye can detect is called the visible spectrum and ranges from about 380 to about 780 nm (nanometers).

The following Table 1 shows the correspondence between the wavelengths of the various spectral bands of the solar radiation and the color of the corresponding luminous sensation perceived by the human eye.

**TABLE 1**

| Color Sensation | Wavelength (nm) |
|---|---|
| Violet | 380 to 424 |
| Blue | 424 to 491 |
| Green | 491 to 575 |
| Yellow | 575 to 585 |
| Orange | 585 to 647 |
| Red | 647 to 780 |

These colors are detected on the retina of the eye by color receptors, called "cones", which are sensitive to color and light. The central retina contains three different cones: blue, green and red which are partially overlapping with each other.

Blue cones detect colors ranging from Violet to Blue and have a maximum sensitivity for wavelengths comprised between 440 and 445 nm. Green cones detect colors ranging from Green to Yellow and have a maximum sensitivity for wavelengths comprised between 535 and 540 nm. Red cones detect colors ranging from Orange to Red and have a maximum sensitivity for wavelengths comprised between 570 and 575 nm.

Light and color sensation depends on the degree of stimulation of the three cones. If the solar light energy is all equally reflected from a surface, then the three cones are uniformly stimulated and the eye/brain system sees the surface as white or black according to the reflection characteristics of the surface. On the other hand, light reflected with an unbalanced spectrum excite some cones more than others and causes a colored sensation.

When a dyed optical element, such as a sunglass lens, is placed between an object and the eye, it attenuates the light intensity and influences the stimulation of the cones. If the curve of spectral transmittance of the optical element is balanced, the result is a simple reduction of the transmitted light along the entire range of wavelengths with a substantially unchanged sensation of the colors.

A first desired feature of optical elements for daily use, such as sunglass lenses, is the reduction of glare, which term refers to the presence of areas or "hot spots" in the field of vision which are of sufficient brightness to cause visual impediment, such as temporary blurring of vision, or ocular fatigue. Glare often occurs when a patch of bright light is reflected from smooth, shiny surfaces, such as water, snow, roadway or glass, into the eye.

A second desired feature of optical elements for daily use, such as sunglass lenses, is the accomplishment of a proper visual acuity, intended as the capability of the eye to discriminate between very small and very close objects. Visual acuity depends on the chromatic contrast and on the luminance contrast which depends in turn on the lighting system, lighting angle and on the degree of surrounding glare.

The visual acuity is especially important when driving a vehicle, up to the point that one of the requirements which the optical elements put on the market must fulfill is that of allowing a correct perception of moving objects, obstacles, traffic lights and signals. In fact, drivers must be capable to recognize the color of the traffic lights, recognize traffic signals or other color-coded safety and control devices even in critical conditions, such as in the case of glare, or at low light conditions caused by weather and time of day.

The U.S. and international standards for optical elements specify the requirements which ensure a proper color recognition of traffic signal lights and road signs when viewed through a dyed optical element. For example, the European Standards introduce an attenuation coefficient (Q quotient) for each of the four signal colors: Red, Blue, Yellow and Green. The Q quotient is the ratio of the luminous transmittance of a dyed lens for the spectral radiant power distribution of the light emitted by a traffic signal t_{sign} to the luminous transmittance of the same lens for the standard illuminant D 65. The standard illuminant D 65 represents medium daylight conditions with the color temperature of 6500 K and is usually generated by the use of xenon lamps with filters.

According to European Standard EN 1836:1997, the Q quotient cannot be less than 0.8 for red and yellow signals, not less than 0.40 for the blue signal and not less than 0.6 for the green signal, which means for example that the visibility through the optical element of the signal traffic lights must be not less than 80% of the visibility of the standard daylight (D65) for red and yellow colors, not less than 40% of the visibility of the standard daylight for the blue color and not less than 60% of the visibility of the standard daylight for the green color. A Q quotient of a lens greater than 1 for a particular color signal therefore implies that such color is less attenuated than the standard daylight so that the lens contributes to enhance the visibility of such signal.

### PRIOR ART

Conventional optical elements, for example sunglass lenses, fail to properly reduce the effects of glare, since they reduce uniformly the intensity of light throughout the visible spectrum. For example, if a hot spot is ten times brighter than the background ambient light, it will remain ten times brighter if a conventional optical element is used to reduce transmittance of the light, say by 50%. Therefore, conventional optical elements do not significantly eliminate the discomfort to the eye or the blurred vision resulting from the difference in the light intensity between the hot spot and the background.

In order to obviate to this problem, the use of polarized optical elements has been suggested in the art.

Polarized optical elements, in fact, can reduce glare by optically filtering the polarized light significantly more than the non-polarized light. Directly reflected sunlight is partially polarized while ambient light is not, and therefore the transmittance of the reflected sunlight would be reduced much more than that of the ambient light, thereby reducing the discomfort to the eyes.

Generally, polarized optical elements such as polarized lenses are obtained by bonding a polarized film onto the plastic surface of the lens substrate or by introducing such a film into the plastic material of the lens substrate during polymerization or by applying a polarizing coating on a lens substrate. These methods, as well as alternative methods of producing polarized lenses, are disclosed in U.S. Patent No. 6,650,473, the content of which is herein incorporated by reference. Regardless of which particular material is used for the substrate of the optical element, it is preferable in many applications to incorporate a polarizing film into the optical element.

Polarized optical elements, however, have a relatively flat transmission spectrum and thereby do not enhance vision and in particular they do not enhance visual acuity. In some circumstances, polarized optical elements may even worsen visual acuity since they tend to reduce the low intensity reflected light which is responsible for creating the luminous and color contrast which improves visual acuity of the image details.

Therefore, while a polarized optical element is effective in reducing fatigue and blurred vision when high intensity reflected light is present (such as water or ice in full sun), it will also disadvantageously reduce at the same time visual acuity especially when such high reflected glare is not present.

Many attempts have been made to develop a polarized lens which increases contrast and enhances visual acuity. For example, U.S. Patent No. 6,334,680 and U.S. Patent No. 6,145,984 disclose to use rare earth oxides, to produce glass lenses with a curve of the factor of spectral transmittance having a series of relative maxima and relative minima.

For example, U.S. Patent No. 6,334,680 discloses a multi-layer lens for eyeglasses showing a curve of the factor of spectral transmittance having a series of relative maxima and relative minima and comprising: a first lens wafer having rare earth oxide additive, such as for example neodymium (Nd), praseodymium (Pr), and erbium oxides, a second lens wafer, a polarizing layer between the first and second lens wafers and an anti-reflective layer adjacent an outside surface of at least one of the lens wafers.

U.S. Patent No. 6,145,984 discloses a lens comprising a front lens element and a rear lens element which are adhered together with a light-polarizer disposed therebetween, wherein at least one of the lens elements comprises a trichroic contrast enhancer which is capable of providing a series of relative maxima and relative minima of the light transmission with respect to CIE illuminant C.

US Patent No. 5,400,175, on the other hand, discloses an ultraviolet radiation and blue light blocking polarizer lens designed primarily for use with sunglasses to block horizontally polarized light, to selectively block selected wavelengths from 300 to 549 nanometers and to pass 30 to 40 percent of wavelengths longer than 625 nanometers. The selective blocking is controlled by a sharp cut-on filter selected to cut-on at either 450, 500, 515, 530, or 550 nanometers.

The known polarized optical elements obtained according to the prior art mentioned above, however, can distort color vision and fail to meet traffic and/or color recognition requirements of the International Sunglass Standards (ANSI Z 80.3 and/or EN1836:1997) and therefore can be unsuitable for use when driving.

In particular, the strong light absorption of neodymium at 589 nm, corresponding to the wavelength of sodium lights in road tunnels as well as LED's commonly used in highway warning signs, can significantly compromise visibility in the tunnels and the recognition of road signals when driving.

### SUMMARY OF THE INVENTION

The present invention aims at providing an optical element which is both polarized to reduce glare and the associated eye fatigue and blurred vision when high intensity reflected light is present and which provides at the same time the wearer with enhanced visual acuity, especially an increased sensitivity to the red and blue colors.

The present invention overcomes the drawbacks of the cited prior art and achieves this object by dying in a special way a polarized optical part of the optical element so as to obtain both an enhanced visual acuity and a reduction of glare.

According to a first aspect thereof, the present invention therefore provides an optical element as defined in attached claim 1.

According to the invention, it has in particular been found that the desired technical effect of a reduced glare coupled with an enhanced perception of chromatic contrast and thus of the visual acuity, may be effectively achieved by dyeing a polarized optical part such that said optical part exhibits a curve of spectral transmittance in a wavelength range comprised between 400 and 700 nm comprising:
i) at least one relative maximum at a wavelength comprised between 400. and 510 nm, and
ii) at least one relative minimum at a wavelength comprised between 510 to 625 nm,
wherein the ratio between the value of the factor of spectral transmittance at said at least one relative maximum and the value of the factor of spectral transmittance at said at least one relative minimum is of at least 1.3, and
wherein the ratio between the value of the factor of spectral transmittance at a wavelength of 700 nm and the value of the factor of spectral transmittance at said at least one relative minimum is of at least 3.0.

For the purposes of the present description and of the claims that follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

In the following description and in the appended claims, the term: factor of spectral transmittance or T, is intended to indicate the percent ratio of the luminous flux let through by the optical element in a wavelength range (λ) of from 380 and 780 nm, to the incident luminous flux in a wavelength range (λ) of from 380 and 780 nm, according to European Standard CEN EN 165 point 2.64.

In accordance with the invention, the polarization characteristics of the optical part of the optical element may be achieved in a number of ways.

In one preferred embodiment, the optical part comprises a polarizing film.

Preferably and will be better apparent later on, one method for the manufacture an optical part polarized in this way is a casting method.

In another preferred embodiment, the optical part comprises a polarizing coating.

In still another preferred embodiment, the polarized optical element comprises a polarizing material incorporated in the optical part.

In a preferred embodiment, the polarized optical part has a degree of polarization P equal to at least 45% as measured according to European Standard EN 1836.

In the following description and in the appended claims, the term: degree of polarization P is defined as the percent ratio of the difference between the maximum and the minimum values of luminous transmittance as determined with linearly polarized radiation to the sum of the maximum and the minimum values of luminous transmittance as determined with linearly polarized radiation according to European Standard EN 1836.

It has been found that this feature can advantageously reduce or virtually eliminate the glare when an object is observed through the optical part against a background having a high level of glare.

More preferably, the polarized optical part has a degree of polarization P as measured according to European Standard EN 1836 comprised between 65% and 99,9%.

In this way, the aforementioned advantageous technical effect is optimized.

In order to enhance visual acuity and as will be better apparent in the following, the invention advantageously exploits the higher sensitivity of the human eye to radiation having a wavelength around 550 nm, so that by reducing the amount of transmitted light within a relatively ample range around this wavelength will not significantly reduce the visibility of the corresponding colors (green-yellow), since the receptive system eye-brain is capable to adapt itself to this reduced energy.

Conversely, the increase of the factor of spectral transmittance in a wavelength range comprised between 400 and 510 nm and between 625 and 700 where the eye is less sensitive, is capable to amplify in a relative manner the corresponding colors (blue-green and orange-red) since the relative luminous energy is higher than that in the wavelength range where the eye sensitivity is at its maximum.

In other words, the selective reduction of the amount of light reaching the eye achieved by the invention will not significantly reduce the visibility of the colors (green and yellow) corresponding to the maximum eye sensitivity thanks to the perception characteristics of the eye/brain system, while the higher transmittance in the wavelength range where the eye is less sensitive (blue, blue-green, orange and red) and the associated higher relative energy reaching eye accounts for an enhancement of the perception of the corresponding colors.

The eye/brain system, in fact, adapts itself to light energy in a similar manner as the exposure system of a photographic camera, which adjusts the shutter speed and light aperture as a function of the light intensity in order to obtain a balanced color and contrast picture. Because of the photopic sensitivity of the eye, the intensity of light in the range of 530-595 weighs more and the eye/brain system adapts mostly to the energy reaching the eye in this range.

However, if the optical element reduces the energy reaching the eye uniformly throughout the visible spectrum, it would provide a corresponding uniform light attenuation. If such uniform attenuation is significant compared to the originating light intensity, the visibility of the colors where the eye has lower sensitivity can be lost, similar to a picture taken at very low light where some colors, depending on the color sensitivity of the photographic film, look dark and faded instead of brilliant and saturated.

On the contrary and as provided by the invention, if the reduction of energy transmitted at the wavelengths corresponding to the "low sensitivity colors" (blue, blue-green, orange and red) is lower than the reduction of energy at the wavelengths corresponding to the "high sensitivity colors" (green and yellow), an enhanced perception of such low sensitivity colors can be obtained because the eye will be adapted to such a lower energy.

According to the invention, this advantageous technical effect is in particular achieved thanks to a proper value (at least 1.3) of the ratio between the value of the factor of spectral transmittance at said at least one relative maximum and the value of the factor of spectral transmittance at said at least one relative minimum and to a proper value (at least 3.0) of the ratio between the value of the factor of spectral transmittance at a wavelength of 700 nm and the value of the factor of spectral transmittance at said at least one relative minimum.

Preferably, the curve of spectral transmittance of the optical part comprises at least one relative maximum at a wavelength comprised between 440 and 500 nm.

In this way, it is advantageously possible to increase the perception of the chromatic contrast by increasing the light transmitted in one of the wavelength ranges wherein the human eye is less sensitive (green-blue).

Preferably, the curve of spectral transmittance of the optical part comprises at least one relative minimum at a wavelength comprised between 540 and 610 nm.

Thanks to this feature, it is advantageously possible to increase in an optimal way the perception of the chromatic contrast by reducing the light transmitted in the wavelength range wherein the human eye is most sensitive without reducing at the same time the visibility of the corresponding colors (green-yellow) thanks to the adaptation capabilities of the receptive system eye-brain.

In a preferred embodiment and in order to fully exploit the aforementioned advantageous technical effect, the curve of spectral transmittance of the optical part comprises at least one relative minimum, at a wavelength comprised between 560 and 600 nm.

Preferably, the value of the factor of spectral transmittance at said at least one relative maximum is comprised between 4% and 40% and, still more preferably, comprised between 5% and 15%.

In this way, it is advantageously possible to obtain the maximum effect of enhancement of perception of the chromatic contrast by increasing the light transmitted in one of the wavelength ranges wherein the human eye is less sensitive (green-blue).

Preferably, the value of the factor of spectral transmittance at said at least one relative minimum is comprised between 2% and 40% and, still more preferably, comprised between 5% and 20%.

In this way, it is advantageously possible to have a correct and adequate perception of the light transmitted in the wavelength range wherein the human eye is most sensitive (green-yellow) thanks to the adaptation capability of the eye-brain receptor system.

In a preferred embodiment, the ratio between the value of the factor of spectral transmittance at said at least one relative maximum and the value of the factor of spectral transmittance at said at least one relative minimum is comprised between 1.3 and 15 and, still more preferably, between 2 and 10.

In this way, it is advantageously possible to optimize the effect of enhancement of perception of the chromatic contrast by suitably increasing the light transmitted in one of the wavelength ranges wherein the human eye is less sensitive (green-blue) with respect to the light transmitted in the wavelength range wherein the human eye is most sensitive (green-yellow).

In a preferred embodiment, the ratio between the value of the factor of spectral transmittance at a wavelength of 700 nm and the value of the factor of spectral transmittance at said at least one relative minimum is comprised between 3.0 and 20 and, still more preferably, between 5 and 15.

In this way, it is advantageously possible to optimize the effect of enhancement of perception of the chromatic contrast by suitably increasing the light transmitted in one of the wavelength ranges wherein the human eye is less sensitive (orange-red) with respect to the light transmitted in the wavelength range wherein the human eye is most sensitive (green-yellow).

In a preferred embodiment and in order to ensure and adequate perception of the chromatic contrast in the wavelength range comprised between 400 and 625 nm and, more preferably, between 440 and 610 nm, the difference between the value of the factor of spectral transmittance at said at least one relative maximum and the value of the factor of spectral transmittance at said at least one relative minimum is comprised between 2% and 50%.

Still more preferably, such a difference is comprised between 5% and 30%.

In a preferred embodiment and in order to ensure and adequate perception of the colors in the red range, which is of particular importance in the vision of the traffic light signals and of warning signals when driving, the value of the factor of spectral transmittance at a wavelength of 700 nm is equal to at least 20% and, more preferably, equal to at least 30%.

Still more preferably, the value of the factor of spectral transmittance at a wavelength of 700 nm is comprised between 30% and 90%.

In a preferred embodiment, the factor of spectral transmittance in a wavelength range comprised between 625 and 700 nm has an increasing value as the wavelength increases.

In this way, it is advantageously possible to optimize the effect of an enhanced perception of the chromatic contrast by increasing the light transmitted in one of the wavelength ranges wherein the human eye is less sensitive (orange-red).

In a preferred embodiment and in order to ensure and adequate perception of the colors in the wavelength range wherein the human eye is most sensitive (green-yellow), the value of the factor of spectral transmittance in a wavelength range comprised between 480 and 510 nm is equal to at least 10%.

Still more preferably, the value of the factor of spectral transmittance in a wavelength range comprised between 480 and 510 nm is comprised between 10% and 20%.

Preferably, the value of the factor of spectral transmittance at a wavelength equal to or lower than 400 nm is substantially equal to 0%.

In this way, it is advantageously possible to prevent that the harmful ultraviolet radiations could reach the eye.

For the purposes of the invention, the optical element is preferably essentially constituted by a substrate made of transparent plastics material.

Plastics materials of more preferred and advantageous use are those commonly employed in the optical field, such as: polymethyl methacrylate, polyol-allyl-carbonates, aromatic polycarbonates, polystyrene, cellulose esters, polyacrylates, polyalkylacrylates, polyurethanes, saturated and unsaturated polyesters, transparent polyamides, as well as copolymers and co-blended polymers thereof.

Preferably, the desired chromatic characteristics of the optical part of the optical element of the invention, may be achieved by incorporating in the optical part or, alternatively, by incorporating in a protective film applied on the optical part, at least one dyeing substance adapted to suitably filter the visible light.

Examples of preferred dyeing substances that can be used to dye the optical element are Disperse and Soluble Dyes as described in the Color Index III Edition (Society of Dyers and Colorists, PO Box 244, Perkin House, 82 Grattan Road, Bradford BD1 2JB, England).

Disperse Dyes can be used to dye the polarized substrate on the surface and Soluble Dyes can be used when the substrate is dyed in bulk.

Suitable dyeing substances or dyes preferably, but not exclusively, include dyeing substances comprising azobenzene or anthraquinone chromophore groups as defined in the Color Index.

For the purposes of the invention and as will be better apparent in the following, the incorporation of the dyeing substance or substances in the optical part or in the aforementioned protective film may be carried out by immersing the optical part with or without the protective film in a solution including the dyeing substance(s) (in this case indicated with the term: Disperse Dyes), or by incorporating the dyeing substance(s) (in this case indicated with the term: Solvent Dyes) in the mass of the material which constitutes the optical part during its manufacture.

In a prefened embodiment, the aforementioned at least one dyeing substance is Disperse Violet 1, which has a chemical formula C₁₄H₁₀N₂O₂ (as documented by the Color Index). Disperse Violet 1 is an anthraquinone dye having an absorption peak or, in other words, a relative minimum in the curve of the factor of spectral transmittance in the wavelength range comprised between 540 and 600 nm.

The use of Disperse Violet 1 advantageously allows to absorb the light in a wavelength range comprised between 540 and 600 enhancing the perception of the remaining colors, i.e. the "low sensitivity colors" blue-green and red-orange.

Preferably, the optical part incorporates a combination of Disperse Dyes and/or Solvent Dyes.

In another preferred embodiment the optical part comprises at least one Disperse dye selected among Disperse Violet 1, Disperse Blue 7 and Disperse Yellow 3. Most preferably, the optical part has a grey color and comprises a combination of Disperse Dyes selected among Disperse Violet 1, Disperse Blue 7 and Disperse Yellow 3.

Among the latter and as said above, the Disperse Violet 1 has a particular importance to the aim of achieving the desired color of the optical element

As said above, in fact, the use of Disperse Violet 1 allows to absorb the light in a wavelength range comprised between 540 and 600 enhancing the perception of the remaining colors, i.e. the "low sensitivity colors" blue-green and red-orange.

Thanks to this preferred combination of dyeing substances, it is advantageously possible to obtain a curve of the factor of spectral transmittance of the polarized optical element which fully complies with the requirements needed to effectively achieve the desired enhancement of the chromatic contrast perception.

In another preferred embodiment, the optical part further incorporates a suitable quantity of Disperse Red 1.5. If the optical part comprises a combination of Disperse Violet 1, Disperse Blue 7 and Disperse Yellow 3, the addition of Disperse Red 15 allows to modify the color of the optical part (from grey to brown), while maintaining at adequate values the value of the factor of spectral transmittance at the relative maximum located between the wavelengths of 400 and 510 nm.

In this way, it is advantageously possible to obtain a color change of the optical part, for example from grey to brown, without altering in a substantial way the curve of the factor of spectral transmittance in the wavelength range of interest for achieving the desired enhancement of the chromatic contrast perception.

In a preferred embodiment and in order to avoid that the harmful ultraviolet radiations may reach the eye, the optical part further comprises at least one ultraviolet absorber, such as one of those available on the market and suitable for the purpose.

According to the invention, the polarized optical element may be either a semi-finished product from which it is possible to obtain by shaping and, possibly, by beveling an ocular of any shape, or a finished product, such as for instance a polarized ocular for eye-protecting devices.

As said above, within the framework of the present description and of the following claims, the term: ocular, is used herein to indicate an element suitable to allow vision, such as for instance a lens for eyeglasses, a visor, a protection mask or a portable screen, according to the provisions of European Standard CEN EN 165.

If the polarized optical element is a finished product, it may be obtained starting from a respective semi-finished product by means of shaping and possibly by beveling operations known *per se,* or by injection molding.

According to a further aspect, the invention also relates to an eye-protecting device which is both polarized to reduce glare and which provides the wearer with enhanced visual acuity, especially an increased sensitivity to the red and blue colors, and comprising a polarized optical element as described hereinabove.

According to a first embodiment, such eye-protecting device is essentially constituted by eyeglasses comprising a supporting frame wherein a couple of lens-shaped polarized oculars are mounted.

The lens-shaped polarized oculars may be ophthalmic lenses, i.e. capable of correcting sight defects, or devoid of any corrective capacity.

According to a second embodiment, such eye-protecting device comprises a polarized ocular in the form of a one-piece polarized visor or unitary lens having a suitable size and shape.

The present invention is also directed toward methods for manufacturing the polarized optical elements described above. Preferred methods are defined in attached claims 31-44 the content of which is herein incorporated by reference.

The exemplary manufacturing methods may yield a finished part ready for an intended optical application. Alternatively, they may yield a polarized optical part in preparation for further processing into another shape or for incorporation into a larger instrument or system. For example, the methods described below illustrates steps that can be used to form a finished polarized optical element ready for final insertion into an eyeglass frame, helmet or goggle; a prescription or non-prescription polarized lens blank to be edged to final shape and inserted into a frame; or a semi-finished polarized lens blank that must be surfaced, polished and edged to a final prescription and shape before being inserted into frames. Similarly, optical parts for displays or windows could be prepared to final shape and size, or manufactured via the methods described below as large parts that are subsequently cut, shaped, formed or further processed to final articles.

For the purposes of the invention, polarized optical elements can be produced by bonding a polarized film onto the surface of the substrate, preferably a plastics material, which constitutes the optical element or by introducing such a film into the plastic material of the lens substrate during polymerization of the same or by applying a polarizing coating on a lens substrate. However, there are a variety of methods available for producing polarized optical elements.

According to the invention, one method for manufacturing a polarized optical element comprising a dyed polarized optical part is a casting method which generally comprises placing a polarizing film preformed to have a curved surface, preferably a substantially spherical surface, in a cavity formed by glass molds having concave and convex inner surfaces. A polymerizable plastic monomer, for example, diethylene glycol biscarbonate or polyurethane resin forming materials, is then injected on opposite sides of the polarizing film and then polymerized.

According the invention, a preferred casting method is defined in attached claim 36 and comprises the steps of:
- providing a polarizing film that is preformed to have a curved surface;
- placing the polarizing film in a cavity formed by glass molds having a concave inner surface and a convex inner surface;
- injecting a polymerizable plastic monomer on opposite sides of the polarizing film;
- polymerizing the polymerizable plastic monomer to form an optical part made of a transparent plastics material;
- dyeing said optical part in such a way that said optical part exhibits a curve of spectral transmittance in a wavelength range comprised between 400 and 700 nm comprising:
   i) at least one relative maximum at a wavelength comprised between 400 and 510 nm, and
   ii) at least one relative minimum at a wavelength comprised between 510 to 625 nm,
wherein the ratio between the value of the factor of spectral transmittance at said at least one relative maximum and the value of the factor of spectral transmittance at said at least one relative minimum is of at least 1.3, and
wherein the ratio between the value of the factor of spectral transmittance at a wavelength of 700 nm and the value of the factor of spectral transmittance at said at least one relative minimum is of at least 3.0.

A press molding method can also be used, in which thermoplastic sheets having different thicknesses are placed on opposite sides of a polarizing film, compressed and thermoformed in a curved, preferably substantially spherical, shape.

Alternatively, an injection molding method can be used, inserting in the mold a curved disk made of a polarizing sheet and than injecting the thermoplastic resin (such as for example polycarbonate or polyamide) in order to obtain a lens with the polarizing film directly bonded on the surface.

Alternatively, a polarized optical element, such as a polarized polycarbonate lens, can be produced by stacking a polarizing film and polycarbonate films or sheets with the polarizing film disposed between the polycarbonate films to thereby provide a laminate having a thickness of for example 0.5 to 2.5 mm, which is then hot-molded under pressure.

In an alternative preferred method, a polarizing coating comprising a layer of a dichroic polarizing laquer may be applied on at least one surface of the optical part as disclosed in U.S. Patent No. 4,648,925, the content of which is herein incorporated by reference.

Preferably, the method further comprises in this case the step of treating said at least one surface of the optical part to form a plurality of microgrooves prior to applying the dichroic polarizing laquer on said at least one surface of the optical part. Preferably, the treating step is carried out by unidirectionally scrubbing the surface of the optical part so as to obtain microgrooves which provide for a liquid crystals alignment.

There is no required order of operation for manufacturing the invention. The optical element can be dyed prior to or simultaneously with the application or incorporation of the polarizing coating or film. When the optical element is dyed, light optical filtering substances may be incorporated into the polymer matrix of the optical element.

The optical element may be dyed using a variety of methods known in the art. One such method is dip dying the optical element in an aqueous bath using disperse dyes. Another method is adding soluble dyes to the mass of plastics material prior to producing the lens.

In a preferred embodiment, the dyeing step of the optical part may be carried out by introducing into the transparent plastics material at least one suitable dyeing substance, for example preferably comprising azobenzene or anthraquinone chromophore groups.

Advantageously, the aforementioned dyeing substances may be incorporated by means of thermal transfer techniques in liquid phase known *per se* in the art.

Preferably, the dyeing step of the optical part by means of the aforementioned techniques may be carried out by dipping the optical part of the optical element, for instance made of a suitable plastics material such as CR39®, in an aqueous solution comprising at least one disperse dyeing substance.

Preferably, the aqueous solution is heated at a suitable temperature, so that the disperse dyeing substance(s) is(are) readily incorporated within the polymer matrix substantially by means of a diffusion mechanism.

Preferably, the aqueous solution is heated at a temperature comprised between 70°C and 97°C, while the dipping time of the optical part is comprised between 20 and 120 minutes.

In a preferred embodiment, the dyeing step of the optical part is carried out by using at least one Disperse Dye selected among Disperse Violet 1, Disperse Blue 7 and Disperse Yellow 3 in quantities adapted to obtain the desired color of the optical part. Most preferably, the dyeing step of the optical part is carried out by using a combination of Disperse Dyes selected among Disperse Violet 1, Disperse Blue 7 and Disperse Yellow 3.

In an alternative embodiment, the dyeing step of the optical part is carried out by further using Disperse Red 15 in a quantity adapted to obtain the desired color of the optical part.

According to an additional aspect thereof, the invention also relates to a casting method for manufacturing a polarized optical element comprising a polarized dyed optical part as is defined in attached claim 41.

This method comprises in particular the steps of:
- providing a polarizing film that is preformed to have a curved surface;
- placing the polarizing film in a cavity having a concave inner surface and a convex inner surface;
- providing a mass of transparent plastics material;
- dyeing the mass of transparent plastics material by means of at least one soluble dyeing substance;
- forming an optical element comprising an optical part by injecting in said cavity said mass of dyed transparent plastics material;
wherein said dyeing step of the mass of transparent plastics material is carried out in such a way that said optical part exhibits a curve of spectral transmittance in a wavelength range comprised between 400 and 700 nm comprising:
i) at least one relative maximum at a wavelength comprised between 400 and 510 nm, and
ii) at least one relative minimum at a wavelength comprised between 510 to 625 nm,
wherein the ratio between the value of the factor of spectral transmittance at said at least one relative maximum and the value of the factor of spectral transmittance at said at least one relative minimum is of at least 1.3, and
wherein the ratio between the value of the factor of spectral transmittance at a wavelength of 700 nm and the value of the factor of spectral transmittance at said at least one relative minimum is of at least 3.0.

According to this embodiment of the invention, therefore, the optical element is manufactured by firstly incorporating in the transparent plastics material at least one soluble dyeing substance adapted to impart the desired spectral characteristics to the optical part and then forming an optical element having a suitable shape and size, for example by injection molding.

Preferably, the dyeing step of the mass of transparent plastics material is carried out by incorporating into the plastics material at least one soluble dyeing substance, for example preferably comprising azobenzene or anthraquinone chromophore groups.

In a preferred embodiment, the dyeing step the mass of transparent plastics material is carried out by incorporating into the plastics material at least one soluble dye selected among the Dyes indicated by the Color Index as "Solvent Dyes" such as for example Solvent Violet 13, Solvent Blue 128 and Solvent Yellow 114. Most preferably, the dyeing step the mass of transparent plastics material is carried out by incorporating into the plastics material a combination of Disperse Dyes selected among Solvent Violet 13, Solvent Blue 128 and Solvent Yellow 114.

In another embodiment, the dyeing step the mass of transparent plastics material is carried out by further incorporating into the plastics material Solvent Red 52.

Also in this case, the solvent dyes are incorporated in the transparent plastics material in quantities suitable to achieve the desired color of the optical part.

Additional objects, features and advantages of the present invention will become more readily apparent from the following non-limitative examples thereof, given hereinbelow for illustration purposes with reference to the accompanying drawing figures. It is to be understood, however, that the following examples and drawings are designed solely for the purpose of illustration and not as a definition of the limits of the invention, for which reference should be made to the appended claims,

### BRIEF DESCRIPTION OF THE DRAWINGS

In the drawing figures, which are to scale, and which are merely illustrative:
FIG. 1 is a transmission curve of a prior art grey colored polarized lens;
FIG. 2 is a transmission curve of a prior art brown colored polarized lens;
FIG. 3 is a transmission curve of a prior art copper colored polarized lens;
FIG. 4 is a transmission curve of a prior art grey-green colored polarized lens;
FIG. 5 is a transmission curve of a violet colored lens in accordance with one embodiment of the invention;
FIG. 6 is a transmission curve of a grey colored lens in accordance with another embodiment of the invention;
FIG. 7 is a transmission curve of a brown colored lens in accordance with another embodiment of the invention;
FIG. 8 is a transmission curve of the photopic sensitivity function of the human eye; and
FIG. 9 is an overlap of the transmission curves of FIG. 6 and FIG. 8.

### DETAILED DESCRIPTION OF THE PRESENTLY PREFERRED EMBODIMENTS

The optical-quality polarized optical elements of the present invention are, in particular, polarized lenses and/or visors for use in sunglasses, sport glasses, and the like which provide the wearer with reduced glare and enhanced color contrast perception.

In particular, the lenses of the present invention comprise a polarizing film or a polarizing coating that is bonded integrally to or on the surface of the lenses which are dyed to enhance color contrast perception. Alternatively, the lenses may include a polarizing film within a lens material which is dyed to enhance color contrast perception.

The present invention is not limited to lenses for use in glasses, or sunglass lenses in particular, but rather the term lens as used herein and in the claims shall be interpreted in its broadest sense to include any type of eye-protecting element or device used to protect or shield the eyes of a wearer, such as, for example, lenses, optical elements, sunglasses, fashion eyewear, sport eyewear, eyeglasses, ophthalmic lenses, visors, shields, face shields for helmets, goggles, and the like (as those terms are customarily used in the eyewear industry).

Some non limiting examples illustrating the manufacture of polarized optical elements according to the invention will be given by way of indication in the following. Unless otherwise specified, in such examples the various compositions are defined by indicating the parts by weight of each component.

### Example 1

### (Prior art)

A polarized lens made of diethylenglycol-bis-allyl-carbonate (CR39®) was obtained by means of a casting method comprising placing a polarizing disc made of a polyvinylalcohol film 30 microns thick (Kurarai, JP) preformed to have a substantially spherical surface in a cavity formed by molds having concave and convex inner surfaces. A solution of transparent polymerizable diethylenglycol-bis-allyl-carbonate monomer including 3% of cross-linking catalyst (diisopropyl peroxy dicarbonate) and 0.3% of UV absorber Uvinul® 3049 (BASF) was then poured on opposite sides of the polarizing film and then polymerized. The polymerization cycle lasted 20 hours and the temperature was adjusted between 40° and 80°C according to polymerization procedures well known to those skilled in the art.

The polarized lens thus obtained was dyed by means of a thermal transfer technique in liquid phase. To this end, a dyeing bath was prepared comprising an aqueous solution including: 0.2% Disperse Blue 7, 0.1% Disperse Red 15 and 0.03% Disperse Yellow 3.

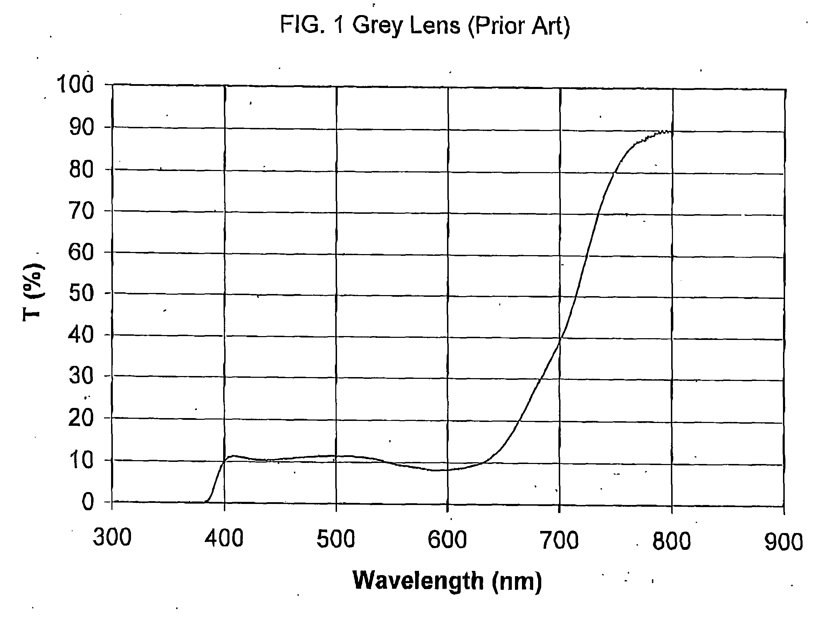

The lens was then kept immersed for 20 minutes in this bath maintained at a temperature of 90°C. The curve of spectral transmittance obtained is the curve of a grey lens and is shown in Figure 1.

### Example 2

### (Prior art)

A polarized lens was manufactured by injection molding of a polycarbonate resin onto a polarizing curved disc made of a polyvinylalcohol (PVA) film sandwiched between two layers of polycarbonate. The total thickness of the film is 0.4 mm. The resin was dyed in bulk by incorporating the following Soluble dyes: 0,020% Solvent Blue 128, 0,015% Solvent Red 52, 0,01% Solvent Yellow 114. 0,2% of Tinuvin 326 (CIBA) as UV absorber was also incorporated into the resin.

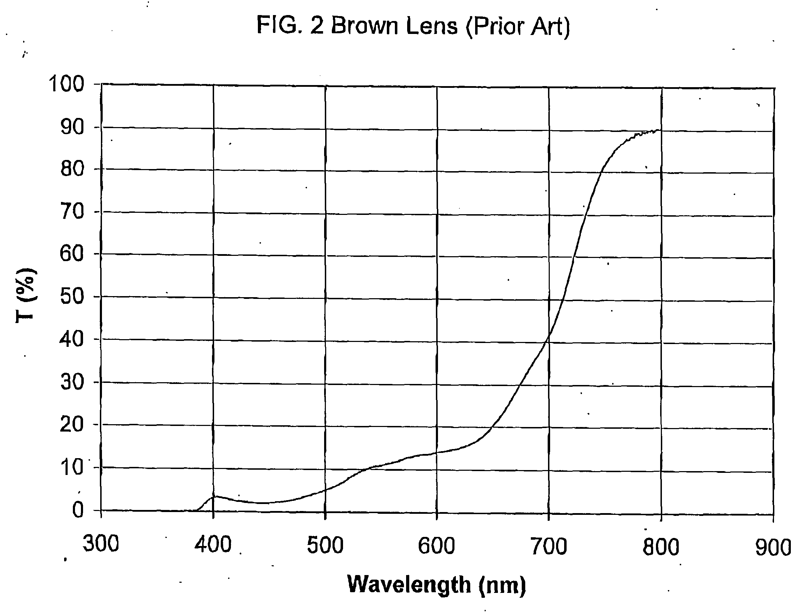

The curve of spectral transmittance obtained is the curve of a brown lens and is shown in Figure 2.

### Example 3

### (Prior art)

A polarized lens was manufactured by bonding at a temperature of 90°C and at a pressure of 7 bar in an autoclave a polyamide lens made by Trogamid® (Degussa) dyed in bulk with the same Soluble dyes of the Example 2 onto a curved disc of polarizing film made of PVA bonded onto a layer of Cellulose Triacetate film.

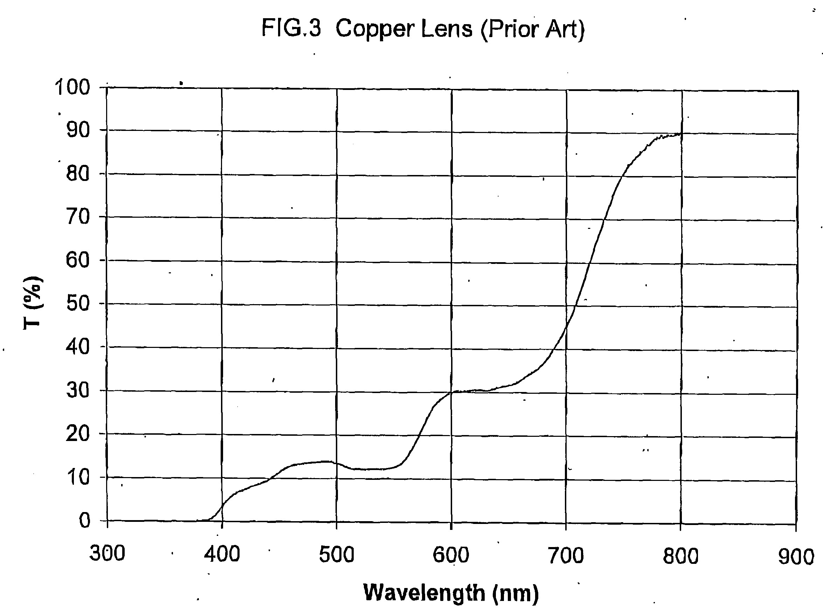

The curve of spectral transmittance obtained is the curve of a copper lens and is shown in Figure 3.

### Example 4

### (Prior art)

A polarized lens made of a polyurethane resin called NXT® (Intercast Europe) was obtained by means of a method such as one of those described in US patent n. 6,127,505 the content of which is herein incorporated by reference, comprising cross-linking a polyurethane prepolymer(in this case obtained from methylenebis(cyclohexyl isocyanate) and a polyester glycol prepared from adipic acid and 1,6-hexanediol (equivalent weight: 500, Ruco Polymer Corporation), with diethylene toluen diamine (DEDTA), commercially available with the trade name of ETAHCURE® 100 (Albemarle Corporation). The prepolymer was mixed with the following Solvent Dyes: 0,03 % Solvent Blue 128, 0,02% Solvent Red 52, 0,010 % Solvent Yellow 114 and the UV absorber 0,3% Uvinul 3049 (BASF).

The mixture was injected in a glass mold containing a curved disc of polarizing film made of a pure polyvinylalcohol film sandwiched between two polycarbonate layers preformed to have a substantially spherical surface and put in a oven to harden. The polymerization cycle lasted 10 hours and the temperature was adjusted at 120°C according to polymerization procedures well known to those skilled in the art.

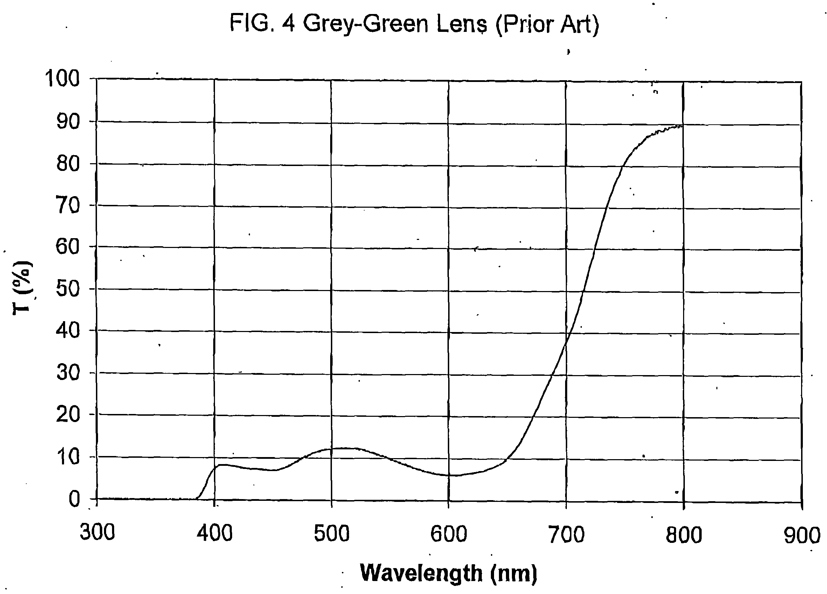

The curve of spectral transmittance obtained is the curve of a grey-green lens and is shown in Figure 4.

### Example 5

### (Invention)

A polarized lens was manufactured in the same way as of Example 4 except for the fact that the polyurethane prepolymer NXT was dyed in bulk by incorporating therein before casting in the mold the following soluble dyes: 0.03% Solvent Violet 13, 0.005% Solvent Yellow 114. 0.3% of UV absorber (Uvinul® 3049, BASF) was also added to the prepolymer.

The polyurethane prepolymer was thoroughly mixed in a conventional way with these substances in order to obtain a homogeneously dyed and perfectly transparent mixture which was then injected into the mold together with the cross-linking agent (DEDTA).

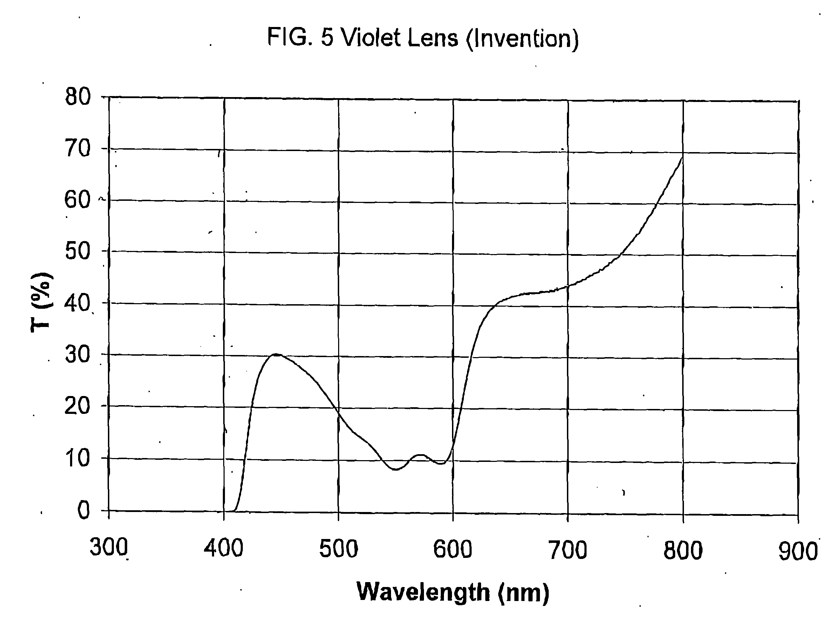

The curve of spectral transmittance obtained is the curve of a violet lens and is shown in Figure 5.

### Example 6

### (Invention)

A polarized CR39® lens was manufactured in the same way as of Example 1, except for the fact that the dyeing bath was an aqueous solution including: 0.2% Disperse Violet 1, 0.1% Disperse Blue 7 and 0.02% Disperse Yellow 3.

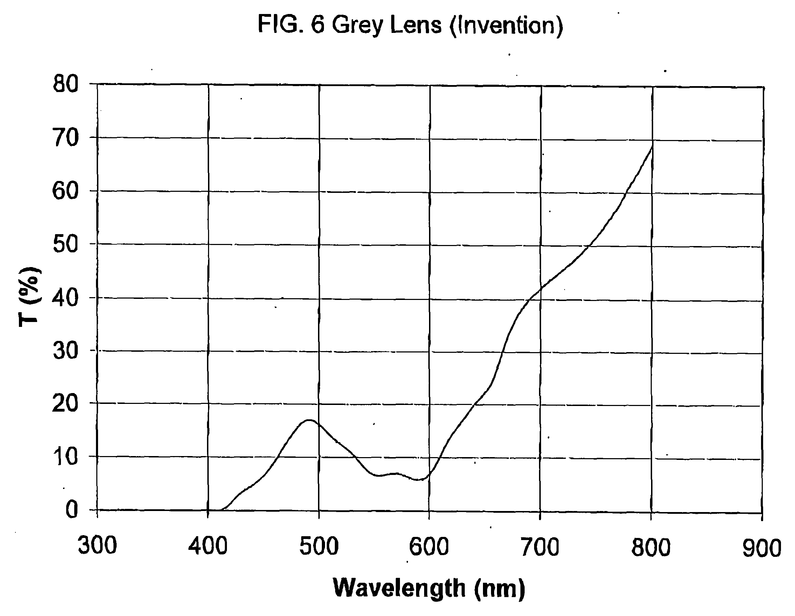

The curve of spectral transmittance obtained is the curve of a grey lens and is shown in Figure 6.

### Example 7

### (Invention)

A polarized CR39 lens was manufactured in the same way as of Example 1 except for the fact that the dyeing bath was an aqueous solution including: 0.2% Disperse Violet 1, 0,1% Disperse Blue 7,0.02% Disperse Yellow 3 and 0.01% Disperse Red 15.

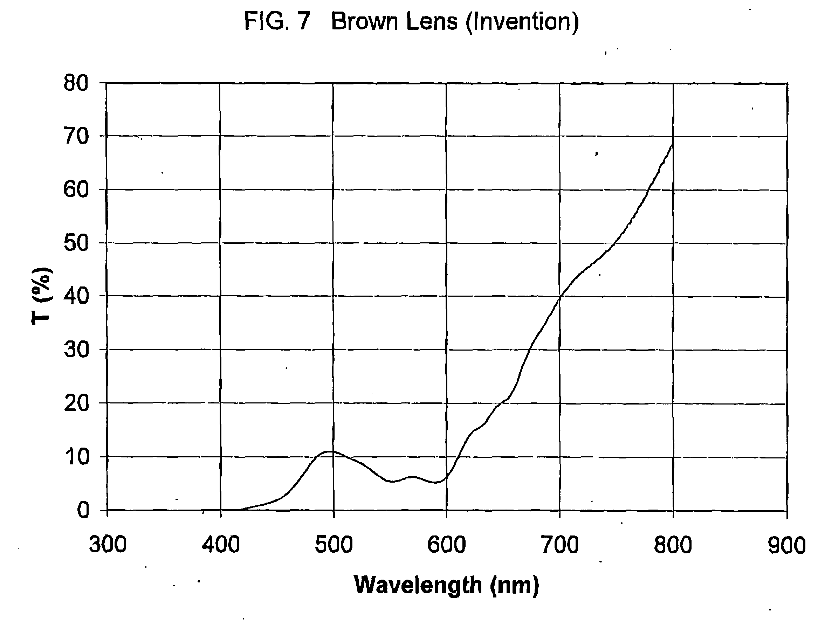

The curve of spectral transmittance obtained is the curve of a brown lens and is shown in Figure 7.

### Example 8

### (Invention)

A polarized lens was manufactured in the same way as of Example 4 except for the fact that the polyurethane prepolymer NXT was dyed in bulk by incorporating therein before casting in the mold the following soluble dyes: 0.03% Solvent Violet 13, 0.015% Solvent Blue 128 and 0.010% Solvent Yellow 114 and with 0.3% of UV absorber (Uvinul® 3049, BASF).

The polyurethane prepolymer was thoroughly mixed in a conventional way with these substances in order to obtain a homogeneously dyed and perfectly transparent mixture which was then injected into the mold together with the cross-linking agent (DEDTA),

The curve of spectral transmittance obtained is the curve of a grey lens and is shown in Figure 6.

### Example 9

### (Invention)

A mass tinted lens was manufactured mixing an allyl resin commercially available under the trade name of RAV 7 MC® (Great Lakes) with the following soluble dyes: 0.028 % Solvent Violet 13, 0.013 % Solvent Blue 128 and 0.008 %, Solvent Red 52, 0.015% Solvent Yellow 114. 0.3% of UV absorber (Uvinul® 3049, BASF) was also added to the resin.

In this case, 2% of a suitable cross-linking agent (perketal PERHEXA® 3M available from Nippon Oil and Fat Corporation ― Tokyo Japan) was added before pouring the resin into the mold, while the polymerization cycle lasted 20 hours and the temperature was adjusted at 90°C according to polymerization procedures well known to those skilled in the art.

The curve of spectral transmittance obtained is the curve of a brown lens and is shown in Figure 7.

### Example 10

### (Evaluation of the attenuation coefficients)

In order to measure the attenuation coefficient (Q Quotient) of the lenses according to the prior art of examples 1 and 2 and of the lenses according to the invention of examples 5-9, a series of tests were carried out according to European Standard EN 1836:1997.

The test results are shown in the following Table 2.

**TABLE 2**

| Relative visibility of traffic lights and colors (Q Quotients) | | | | | |
|---|---|---|---|---|---|
| Example | FST (%) | Red | Yellow | Green | Blue |
| Grey prior art (Ex. 1) | 10 | 1 | 1 | 1 | 1 |
| Grey invention (Ex. 6 and 8) | 10 | 12 | 1 | 1 | 1.4 |
| Brown prior art (Ex. 2) | 15 | 1.2 | 1 | 1 | 1 |
| Brown invention (Ex. 7 and 9) | 15 | 1.4 | 1.1 | 1 | 1.2 |
| Violet invention (Ex. 5) | 10 | 1.2 | 1.03 | 1 | 1.15 |
| FST = Factor of Spectral Transmittance, intended as the ratio of the luminous flux let through by the optical element in a wavelength range (λ) of from 380 and 780 nm, to the incident luminous flux in a wavelength range (λ) of from 380 and 780 nm, according to European Standard CEN EN 165 point 2.64. | | | | | |
| Red traffic light measured between 590 and 640 nm | | | | | |
| Yellow traffic light measured between 550 and 610 nm | | | | | |
| Green traffic light measured between 500 and 550 nm | | | | | |
| Blue signal light measured between 470 and 530 nm | | | | | |

As discussed above, if the Q quotient of a particular color viewed through the lens is higher than 1, it means that the particular color is more visible than white light when both are viewed through the optical element.

By comparing the Q quotients for the prior art Grey and Brown lenses of Examples 1 and 2 to the violet, Grey and Brown lenses according to the invention, which are Examples 5 and, respectively, 6, 8 and 7, 9, it is evident that Red and Blue are significantly enhanced by the lenses according to the invention in comparison to the prior art polarized lenses.

Due to the base color of the polarizing treatment, conventional polarized lenses have neutral colors with a transmission curve having substantially linear portions along the wavelengths of the visible spectrum, as shown in FIGS. 1-4 that represent the curves of spectral transmittance of lenses manufactured according to the prior art (examples 1-4). Because the transmission curves have substantially linear portions, i.e., lack any relative maxima or minima, there are no wavelengths (colors) which are strengthened relative to other wavelengths (colors).

As discussed above, a relative maximum indicates an enhanced light transmittance of the corresponding wavelength and, along therewith, an enhanced light energy reaching the eye, and a relative minimum indicates a reduced light transmittance of the corresponding wavelength and, along therewith, a reduced light energy reaching the eye. Therefore, in the absence of relative maxima or minima in their transmission curves the prior art polarized lenses can at best provide reduced glare, but in no way enhance color contrast and, along therewith, visual acuity.

As may be noted by observing the transmission curves illustrated in Figures 5-7, on the contrary, it is immediately evident that the polarized optical elements of the invention have substantially non-linear curves, i.e. not having substantially linear portions or portions which may be considered substantially linear and, in contrast to what happens for the optical elements of the prior art of Examples 1-4, show:
i) at least one relative maximum at a wavelength comprised between 400 and 510 nm (30% at 441 nm for example 5, 16.5% at 485 nm for examples 6 and 8, 11 % at 495 nm for examples 7 and 9);
ii) at least one relative minimum at a wavelength comprised between 510 to 625 nm (8.5% at 546 nm for example 5, 5.8% at 589 nm for examples 6 and 8, 5.2% at 586 nm for examples 7 and 9);
iii) a ratio between the value of the factor of spectral transmittance at said at least one relative maximum and the value of the factor of spectral transmittance at said at least one relative minimum is of at least 1.3 (3.53 for example 5, 2.8 for examples 6 and 8, 2.1 for examples 7 and 9), and
iv) a ratio between the value of the factor of spectral transmittance at a wavelength of 700 nm and the value of the factor of spectral transmittance at said at least one relative minimum is of at least 3.0 (5.12 for example 5, 7-2 for examples 6 and 8, 7.7 for examples 7 and 9).

Preferably, furthermore, the optical elements of examples 5-9 have a value of the factor of spectral transmittance at a wavelength of 700 nm equal to at least 20% more specifically of 43.5 (example 5), 42% (examples 6 and 8) and of 40% (examples 7 and 9).

The enhancement of the "low sensitivity colors" blue and red is most beneficial to drivers because, as discussed above, red is used for warning signals and traffic lights and blue is used for emergency lights.

As seen in Figures 5-7, the transmission curve increases and reaches a relative maximum at a wavelength lower than 500 nm, whereupon it decreases, reaching a relative minimum in the range of about 545 to 595 nm. Then the transmission curve increases preferably without further maxima or minima.

As said above, because the factor of spectral transmittance at wavelengths in the range of 545 to 595 is reduced, the eye of the viewer looking through the polarized lenses of Examples 5-9 receives a lower energy related to the "high sensitivity colors" green and yellow within that range. The eye of the viewer, on the other hand, receives a higher energy related to the "low sensitivity colors" corresponding to wavelengths lower than 500 nm or higher than 600 nm, the perception of which is correspondingly enhanced.

For example, the viewer looking through the lenses of Examples 5, 6, 7, 8 and 9 will have heightened sensitivity to blue-(partial) green and (partial) orange-red, corresponding to the relative maximum transmission at about 440-500 nm and the continuously increasing transmission beyond about 625 nm.

Referring to Example 5 and Figure 5, the viewer's sensitivity is especially enhanced for blue and red, corresponding to the relative maximum transmission at about 445-466 nm and the plateau at about 650 nm, respectively.

Thus in the polarized optical elements of the invention, blue and red are preferably enhanced the most, and blue-green and orange are enhanced to a lesser extent. Yellow and green are weakened, but their visibility is still good, as shown by their Q Quotient of 1, due to the high sensitivity of the eye-brain system to these colors. Therefore, whereas yellow and green are weakened, they nonetheless meet the European standard of 0.8 and 0.6, respectively, and are just as visible as white light, as represented by their Q Quotient of at least 1.

The invention therefore provides polarized optical elements that fully meet color and traffic signal requirements of US and European Standard EN 1836:1997 and ANSI Z80.3 for non-prescription sunglasses and enhance color contrast.

The polarized optical elements of the invention can absorb significantly all of the UV radiation and substantial part of the violet radiation, which is close to the boundary with the UV radiation.

Referring to Figures 5-7 which show the curves of spectral transmittance of the polarized lenses according to Examples 5-9, it may be observed that these transmission curves have a value of the factor of spectral transmittance which is substantially null up to about 400 nm.

It is desirable to have no transmission at wavelengths at about 400 nm and less, which is ultraviolet (UV) radiation, which are harmful to the eyes. Notably, the transmission of wavelengths between about 400-410 nm is also close to zero, because this range of wavelengths corresponds to violet radiation that is dangerously near the boundary between the UV and violet radiation.

Because of the enhancing effect of the present invention, Violet is seen more than when viewed through a conventional optical element, but not more than when viewed through the naked eye.

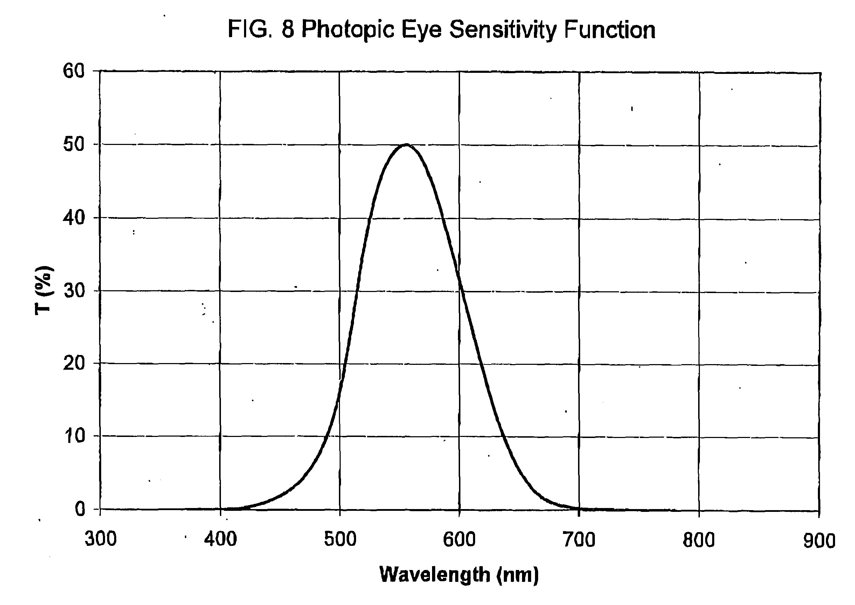

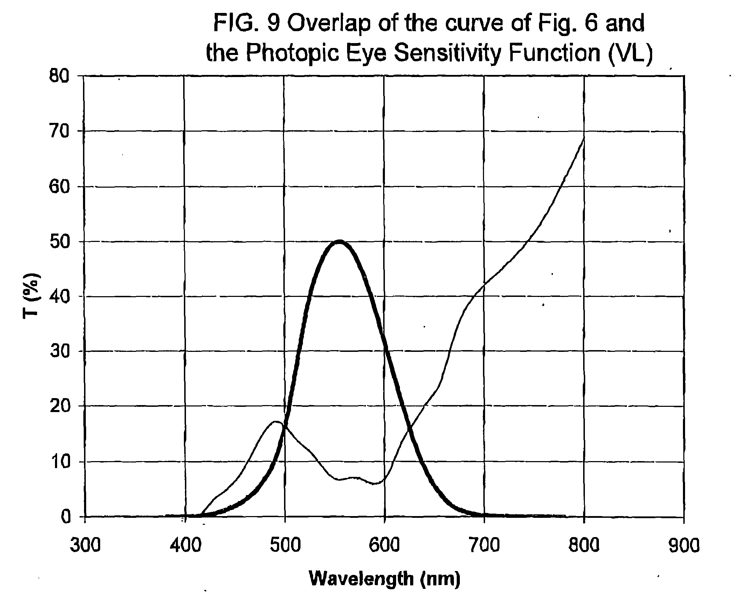

In order to further illustrate the chromatic compensation mechanism of the present invention, reference will now be made to the curves shown in Figures 8 and 9.

Figure 8 shows the photopic sensitivity curve, of the human eye (VL) having a maximum sensitivity around 550 nm. Because of the higher sensitivity of the eye to radiation having a wavelength around 550 nm, reducing the amount of light at these wavelengths will not significantly reduce the visibility of the corresponding colors. However, if the same amount of light is reduced at wavelengths where the eye is less sensitive, more specifically, violet, blue, blue-green, orange-red and red, the visibility of these colors will be compromised because the eye-brain system is less sensitive to these wavelengths.

A preferred embodiment of the invention has a relative minimum transmittance in the region of maximum sensitivity of the eye, which helps to reduce the amount of light reaching the eye but will not significantly reduce the visibility of the corresponding colors (green and yellow). The eye/brain system, however, will adapt itself to such reduced energy being the most sensitive one to the eye. Because the eye/brain system has adapted itself to the reduced energy in the 550 nm range and because the lens has a higher transmittance in the range where the eye is less sensitive (blue, blue-green, orange and red), the relative energy reaching the eye for these colors is higher than the energy in the 550 nm range, and therefore the perception of such colors is enhanced.

As may be seen from Figures 5-7, the transmission at wavelengths below about 500 nm and above about 625 nm are greater than the transmission at the range of maximum sensitivity of the eye at about 550 nm, therefore establishing the enhancement of color perception at those wavelengths.

A visual example of the chromatic compensation effect of the invention is depicted in Figure 9, which shows an overlap of the transmission curve of Examples 6 and 8, represented by the narrow line and the Photopic Sensitivity of the Human Eye, represented by the thicker line. As evident from Figure 9, the polarized optical element of Examples 6 and 8 provides a reduced transmission of light at wavelengths within the range of about 500 - 625 nm ("reduced range''), in which the sensitivity of the human eye is the strongest. Because the transmission at the reduced range is lower than the transmission of the other ranges of wavelengths at which the eye is not as sensitive (400-500 nm; 625-800 nm) ("enhanced range"), the perception of the colors associated to the enhanced range is increased.

A preferred effect of the present invention is an enhancement of chromatic contrast seen through polarized optical elements. Such a chromatic contrast is improved, as demonstrated by the attenuation coefficient "Q quotient" discussed above, for each of the four signal colors Red, Blue, Yellow and Green, introduced by the European Standards.

Thus, while there have been shown and described and pointed out novel features of the present invention as applied to preferred embodiments thereof, it will be understood that various omissions and substitutions and changes in the form and details of the disclosed invention may be made by those skilled in the art without departing from the spirit of the invention. It is the intention, therefore, to be limited only as indicated by the scope of the claims appended hereto.

## Claims

1. A polarized optical element comprising a polarized optical part dyed such that said optical part exhibits a curve of spectral transmittance in a wavelength range comprised between 400 and 700 nm comprising:
i) at least one relative maximum at a wavelength comprised between 400 and 510 nm, and
ii) at least one relative minimum at a wavelength comprised between 510 to 625 nm,
wherein the ratio between the value of the factor of spectral transmittance at said at least one relative maximum and the value of the factor of spectral transmittance at said at least one relative minimum is of at least 1.3, and
wherein the ratio between the value of the factor of spectral transmittance at a wavelength of 700 nm and the value of the factor of spectral transmittance at said at least one relative minimum is of at least 3.0.

2. The polarized optical element according to claim 1, wherein the optical part comprises a polarizing film.

3. The polarized optical element according to claim 1, wherein the optical part comprises a polarizing coating.

4. The polarized optical element according to claim 1, wherein a polarizing material is incorporated in the optical part.

5. The polarized optical element according to claim 1, wherein the polarized optical part has a degree of polarization P equal to at least 45% as measured according to European Standard EN 1836.

6. The polarized optical element according to claim 1, wherein the curve of spectral transmittance of the optical part comprises at least one relative maximum at a wavelength comprised between 440 and 500 nm.

7. The polarized optical element according to claim 1, wherein the curve of spectral transmittance of the optical part comprises at least one relative minimum at a wavelength comprised between 540 and 610 nm.

8. The polarized optical element according to claim 7, wherein the curve of spectral transmittance of the optical part comprises at least one relative minimum at a wavelength comprised between 560 and 600 nm.

9. The polarized optical element according to claim 1, wherein the value of the factor of spectral transmittance at said at least one relative maximum is comprised between 4% and 40%.

10. The polarized optical element according to claim 1, wherein the value of the factor of spectral transmittance at said at least one relative minimum is comprised between 2% and 40%.

11. The polarized optical element according to claim 1, wherein the ratio between the value of the factor of spectral transmittance at said at least one relative maximum and the value of the factor of spectral transmittance at said at least one relative minimum is comprised between 1.3 and 15.

12. The polarized optical element according to claim 1, wherein the ratio between the value of the factor of spectral transmittance at a wavelength of 700 nm and the value of the factor of spectral transmittance at said at least one relative minimum is comprised between 3.0 and 20.

13. The polarized optical element according to claim 1, wherein in a wavelength range comprised between 400 and 625 nm the difference between the value of the factor of spectral transmittance at said at least one relative maximum and the value of the factor of spectral transmittance at said at least one relative minimum is comprised between 2% and 50%.

14. The polarized optical element according to claim 13, wherein in a wavelength range comprised between 400 and 625 nm the difference between the value of the factor of spectral transmittance at said at least one relative maximum and the value of the factor of spectral transmittance at said at least one relative minimum is comprised between 5% and 30%.

15. The polarized optical element according to claim 1, wherein the value of the factor of spectral transmittance at a wavelength of 700 nm is equal to at least 20%.

16. The polarized optical element according to claim 1, wherein the factor of spectral transmittance in a wavelength range comprised between 625 and 700 nm has an increasing value as the wavelength increases.

17. The polarized optical element according to claim 1, wherein the value of the factor of spectral transmittance in a wavelength range comprised between 480 and 510 nm is equal to at least 10%.

18. The polarized optical element according to claim 1, wherein the value of the factor of spectral transmittance at a wavelengths equal to or lower than 400 nm is substantially equal to 0%.

19. The polarized optical element according to claim 1, wherein the optical part is essentially constituted by a substrate made of transparent plastics material.

20. The polarized optical element according to claim 19, wherein said substrate made of transparent plastics material is selected from the group comprising: polymethyl methacrylate, polyol-allyl-carbonates, aromatic polycarbonates, polystyrene, cellulose esters, polyacrylates, polyalkylacrylates, polyurethanes, saturated and unsaturated polyesters, transparent polyamides, copolymers and co-blended polymers thereof.

21. The polarized optical element according to claim 1, wherein the optical part comprises at least one dyeing substance adapter to filter le visible-light.

22. The polarized optical element according to claim 21, wherein the optical part comprises a combination of Disperse Dyes and/or Solvent Dyes.

23. The polarized optical element according to claim 22, wherein the optical part comprises at least one Disperse dye selected among Disperse Violet 1, Disperse Blue 7 and Disperse Yellow 3.

24. The polarized optical element according to claim 23, wherein the optical part further comprises Disperse Red 15.

25. The polarized optical element according to claim 1, wherein the optical part further comprises at least one ultraviolet absorber.

26. The polarized optical element according to anyone of the preceding claims, in the form of semi-finished product for the manufacture of oculars for eyeglasses.

27. The polarized optical element according to anyone of claims 1-25, in the form of an ocular.

28. The polarized optical element according to claim 27, wherein said ocular is a polarized lens for eyeglasses.

29. The polarized optical element according to claim 27, wherein said ocular is a polarized visor.

30. An eye-protecting device comprising a polarized optical element according to anyone of claims 27-29.

31. A method for manufacturing a polarized optical element comprising a dyed polarized optical part, comprising the steps of:
- providing an optical part made of a transparent plastics material;
- applying a polarizing coating on at least one surface of the optical part;
- bonding the polarizing coating to said at least one surface of the optical part;
- dyeing said optical part in such a way that said optical part exhibits a curve of spectral transmittance in a wavelength range comprised between 400 and 700 nm comprising:
i) at least one relative maximum at a wavelength comprised between 400 and 510 nm, and
ii) at least one relative minimum at a wavelength comprised between 510 to 625 nm,
wherein the ratio between the value of the factor of spectral transmittance at said at least one relative maximum and the value of the factor of spectral transmittance at said at least one relative minimum is of at least 1.3, and
wherein the ratio between the value of the factor of spectral transmittance at a wavelength of 700 nm and the value of the factor of spectral transmittance at said at least one relative minimum is of at least 3.0.

32. A method according to claim 31, wherein said polarizing coating comprises a polarizing film.

33. A method according to claim 31, wherein said polarizing coating comprises a layer of a dichroic polarizing laquer.

34. A method according to claim 33, further comprising the step of treating said at least one surface of the optical part to form a plurality of microgrooves prior to applying the polarizing coating on said at least one surface of the optical part.

35. A method according to claim 31, wherein the dyeing step is carried out prior to the step of providing the optical part by:
- providing a mass of transparent plastics material;
- dyeing the mass of transparent plastics material by means of at least one soluble dyeing substance.

36. A method for manufacturing a polarized optical element comprising a dyed polarized optical part, comprising the steps of:
- providing a polarizing film that is preformed to have a curved surface;
- placing the polarizing film in a cavity formed by glass molds having a concave inner surface and a convex inner surface;
- injecting a polymerizable plastic monomer on opposite sides of the polarizing film;
- polymerizing the polymerizable plastic monomer to form an optical part made of a transparent plastics material;
- dyeing said optical part in such a way that said optical part exhibits a curve of spectral transmittance in a wavelength range comprised between 400 and 700 mn comprising:
i) at least one relative maximum at a wavelength comprised between 400 and 510 nm, and
ii) at least one relative minimum at a wavelength comprised between 510 to 625 nm,
wherein the ratio between the value of the factor of spectral transmittance at said at least one relative maximum and the value of the factor of spectral transmittance at said at least one relative minimum is of at least 1.3, and
wherein the ratio between the value of the factor of spectral transmittance at a wavelength of 700 nm and the value of the factor of spectral transmittance at said at least one relative minimum is of at least 3.0.

37. The method according to claim 31 or 36, wherein said dyeing step of the optical part is carried out by introducing into the transparent plastics material at least one dyeing substance.

38. The method according to claim 31 or 36, wherein said dyeing step of the optical part is carried out by dipping the optical part in an aqueous solution comprising at least one disperse dyeing substance.

39. The method according to anyone of claims 37 or 38, wherein said dyeing step of the optical part is carried out by using at least one Disperse Dye selected among Disperse Violet 1, Disperse Blue 7 and Disperse Yellow 3.

40. The method according to claim 39, wherein said dyeing step of the optical part is carried out by further using Disperse Red 15.

41. A method for manufacturing a polarized optical element comprising a dyed polarized optical part, comprising the steps of:
- providing a polarizing film that is preformed to have a curved surface;
- placing the polarizing film in a cavity having a concave inner surface and a convex inner surface;
- providing a mass of transparent plastics material;
- dyeing the mass of transparent plastics material by means of at least one soluble dyeing substance;
- forming an optical element comprising an optical part by injecting in said cavity said mass of dyed transparent plastics material;
wherein said dyeing step of the mass of transparent plastics material is carried out in such a way that said optical part exhibits a curve of spectral transmittance in a wavelength range comprised between 400 and 700 nm comprising:
i) at least one relative maximum at a wavelength comprised between 400 and 510 nm, and
ii) at least one relative minimum at a wavelength comprised between 510 to 625 nm,
wherein the ratio between the value of the factor of spectral transmittance at said at least one relative maximum and the value of the factor of spectral transmittance at said at least one relative minimum is of at least 1.3, and
wherein the ratio between the value of the factor of spectral transmittance at a wavelength of 700 nm and the value of the factor of spectral transmittance at said at least one relative minimum is of at least 3-0.

42. The method according to claim 35 or 41, wherein said dyeing step of the mass of transparent plastics material is carried out by incorporating in the plastics material at least one soluble dyeing substance.

43. The method according to claim 42, wherein said dyeing step the mass of transparent plastics material is carried out by incorporating into the plastics material at least one Solvent Dye selected among Solvent Violet 13, Solvent Blue 128 and Solvent Yellow 114.

44. The method according to claim 43, wherein said dyeing step the mass of transparent plastics material is carried out by further incorporating into the plastics material Solvent Red 52.
